# EUROPEAN PATENT APPLICATION

(11) **EP 1 026 032 A2**
(43) Date of publication of application: **09.08.2000**
(21) Application number: 00300837.2
(22) Date of filing: 03.02.2000
(51) Int. Cl.: B60Q 1/26

(54) **Flat automobile lamp with led**

(30) Priority: 03.02.1999 CZ 35699
(71) Applicant: AUTOPAL S.R.O., Novy Jicin 741 01 (CZ)
(72) Inventor: Vejbor, Petr, Olomouc (CZ); Kubena, Vladimir, Novy Jicin (CZ); Navratil, Jiri, Kunin 742 53 (CZ)
(74) Representative: Godwin, Edgar James

(57) **Abstract**

A flat automobile lamp with LEDs comprised of printed circuit boards serving as holders of LED light sources, the proper LED light sources, parabolic reflectors, diffusion optics and a lamp cover lens, whereby, said printed circuit boards (2) of said LED light sources (1) follow the inner side of said lamp cover lens (5) and can form layers (6), whereby, optical axis (4) of said LED light sources (1) is directed to the optical axis of said lamp by a paraboloidal reflector (3) carrying on its surface diffusion elements (7) so that said lamp cover lens (5) can be even and colourless or of any colour without any regard to the limits of surfaces for individual signal lamps, as they are determined by arrangement and number of said LED light sources (1).

## Description

The present invention relates to a way how LEDs serving as light sources with reflective optical elements are placed in an automobile lamp or signalling lamp.

Automobile signal lamps with LEDs serving as light sources use in their optical design parabolic reflectors, Fresnel lenses and refractive optics. After refinement in the LED light source production the reflectors are not used any more. Instead of a lamp cover lens, sometimes, a holographic grid is used. The lamps are often designed only as a set of individual LED light sources situated under a lamp cover lens, whereby the desired light quantity and distribution so that they meet specific requirements are provided by selecting their number and geometric arrangement and optionally by deflecting optical axes of the LED light sources. In case of a design of LED light sources with shapped contacts on metallic electrodes, they can be arranged spherically only around one axis. It is known to use as a third brake light a reflector having an off-axis situated light source with refractors.

### Summary of the Invention

A flat automobile lamp with LEDs utilises LED light sources soldered in LED holders, what are plane printed circuit boards under parabolic reflectors that are situated so that the LED holder edge follows the inner shape of a cover lens and axes of reflectors are oriented in the direction of the lamp optical axis. In certain instances, it is possible to provide more layers of holders with LEDs, whereby the total area occupied is decreased but the depth occupied is increased. The LED holders are fastened in the lamp by means of holders that can simultaneously serve as connectors or LEDs can be fixed on the other side of the parabolic reflectors (e.g. by snapping). In this case the parabolic reflectors and LEDs would form one part. The lamp is also provided with a refractive optics on a parabolic reflector or on the inner side of a lamp cover lens. The size and the parabolic reflector cut-out determine the shape and the size of a illuminating surface area of a single LED light source and the distance between individual layers. Colour of said cover lens is independent of the colour of the emitting LED light sources and acts as a grey filter on the output light beam. This fact enables greater appearance possibilities of a combined signal lamp.

### Brief Description of the Drawings

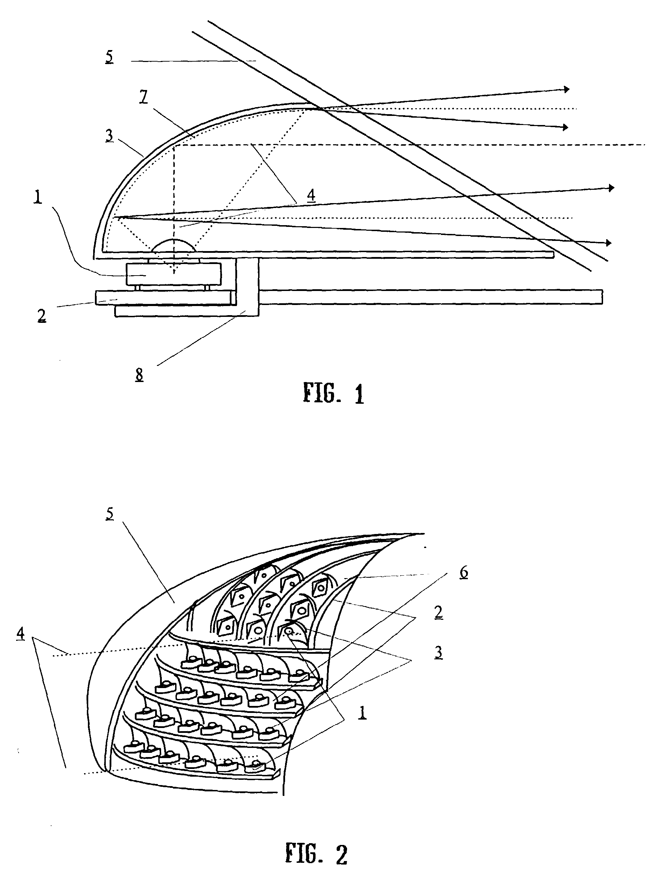

Figure 1 shows an optical scheme of a flat automobile lamp comprised of LEDs, a parabolic reflector and a lamp cover lens. Figure 2 shows a way of spatial arrangement of the LED holders provided with paraboloidal reflectors, that follow the inner surface of a lamp cover lens.

### Detailed Description

Figure 2 shows a schematic cross-sectional illustration of a flat automobile lamp with LEDs comprising such a configuration of LED holders 2, where in the bottom part said LED holders 2 are aligned in layers 6 horizontally and in the upper part the arrangement is alternated by a vertical one. Said LED holders 2 with said LED light sources 1 are made in the shape of sections of the inner form of a lamp cover lens 5. The size and the cut-out of a parabolic reflector 3 used determine the shape and the size of the illuminating area of one LED light source 1 and consequently also the distance between individual layers of LED holders 2 provided with parabolic reflectors 3. All reflectors 3 have their optical axis 4 oriented identically. They can also have diffusive elements 7 at their surfaces. LED light sources 1 of different lamps can be placed adjacently on one LEDs holder 2.

### Industrial Use

A flat automobile lamp with LEDs is applicable as a signalling lamp, preferably in road transport means.

## Claims

1. A lamp with LEDs which is comprised of printed circuit boards serving as LED holders, single LED light sources, parabolic reflectors, diffusive optics and a lamp cover lens, **characterised in that** said LED holders (2) carrying said LED light sources (1) are fastened in said lamp by means of holders (8) that are a part of a carrier of said parabolic reflectors (3), whereby, by mutual interconnecting of said LED holders (2) and said parabolic reflectors (3) a body is formed that follows the shape of said lamp cover lens (5) and separates the light part of said lamp from the electric and the assembly one, whereby any colour of said lamp cover lens (5) acting as a grey filter on the output light beam brings makes more appearance design options of said signal lamp possible.

2. A lamp of Claim 1, **characterised in that** said LED holders (2) carrying said LED light sources (1) have a shape corresponding to the cut-outs of the inner surface of said lamp cover lens (5) and can form layers (6) of thickness equal to the height of said LED holders (2) and said reflector (3).

3. A lamp of Claim 1 or 2, **characterised in that** under said cover lens (5) more different layers (6) can be situated that differ from each other in their geometry.

4. A lamp of Claims 1 to 3, **characterised in that** in case of a combined configuration, the individual signal lamps are determined by their number, arrangement, colour and electrical connection of the corresponding LED light sources (1).

5. A lamp of Claims 1 to 4, **characterised in that** said lamp cover lens (5) can be of any colour or colourless independently of boundaries of individual signal lamps.

6. A lamp of Claims 1 to 5, **characterised in that** said parabolic reflectors (3) can form a single surface carrying holders (8) of LED holders (2) with electrical connections of exactly those LED light sources (1) that correspond to individual signal lamps on the other side.

7. A lamp of Claims 1 to 6, **characterised in that** said parabolic reflectors (3) can carry on their surface refractive optics (7).
